# NOUVEAU FASCICULE DE BREVET EUROPEEN

(11) **EP 3 781 381 B2**
(45) Date de publication et mention de la décision concernant l'opposition: **29.10.2025**
(45) Mention de la délivrance du brevet: 07.09.2022
(21) Numéro de dépôt: 19773136.7
(22) Date de dépôt: 16.04.2019
(51) Int. Cl.: B29C 49/42, B65G 29/00, B29B 11/14

(54) **PROCEDE DE TRANSPORT ET DISPOSITIF DE TRANSPORT DE TYPE ROTATIF POUR DES PREFORMES EN MATIERE THERMOPLASTIQUE**
VERFAHREN UND VORRICHTUNG ZUM ROTATIONSFÖRDERN VON AUS THERMOPLASTISCHEN MATERIALIEN HERGESTELLTEN VORFORMLINGEN
PROCESS AND DEVICE FOR ROTATIONALLY CONVEYING PREFORMS MADE OF THERMOPLASTIC MATERIALS

(30) Priorité: 20.04.2018 FR 1853498
(43) Date de publication de la demande: 24.02.2021
(73) Titulaire: Sidel Participations, 76930 Octeville-sur-Mer (FR)
(72) Inventeur: BOURVELLEC, Loïc, 76930 Octeville-sur-mer (FR); MORIN, Stéphane, 76930 Octeville-sur-mer (FR); BIANCHINI, Cédric, 76930 Octeville-sur-mer (FR)
(74) Mandataire: Sidel Group
(86) Numéro de dépôt international: PCT/FR2019/050900
(87) Numéro de publication internationale: WO 2019/202256

(56) Documents cités:
- EP-A1- 1 279 477
- EP-B1- 2 233 413
- WO-A2-2013/135496
- DE-A1- 102013 014 618
- DE-A1- 102014 012 528
- DE-A1- 19 944 514
- IT-A1- PR20 090 073
- US-A- 4 793 960
- US-A1- 2018 015 657

## Description

### DOMAINE TECHNIQUE DE L'INVENTION

L'invention concerne un procédé de transport et un dispositif de transport de type rotatif pour des préformes en matière thermoplastique.

L'invention concerne plus particulièrement un dispositif de transport de type rotatif pour des préformes en matière thermoplastique comportant au moins un corps et un col, notamment mais non exclusivement des préformes comportant un col muni de moyens d'indexation destinés à permettre d'orienter angulairement ladite préforme dans une position de référence déterminée par rapport à un axe principal de la préforme.

L'invention concerne également un procédé de transport de préformes en matière thermoplastique comportant au moins un corps et un col.

### ÉTAT DE LA TECHNIQUE

On connaît de l'état de la technique des exemples de dispositifs de transport de type rotatif pour des préformes en matière thermoplastique.

De tels dispositifs de transport sont notamment utilisés dans une installation de fabrication de récipients en matière thermoplastique, tels que des bouteilles en PET, pour assurer le transport d'un flux de préformes puis de récipients à travers l'installation au gré des étapes successives de fabrication de récipients à partir de telles préformes.

De manière connue, les principales étapes de fabrication consistent tout d'abord à conditionner thermiquement une préforme dans un four dans le but d'en ramollir la matière thermoplastique pour permettre son formage en un récipient qui est réalisé par soufflage ou par étirage-soufflage dans un moule, ledit récipient ainsi obtenu étant ensuite susceptible d'être rempli et fermé.

Selon une première conception de dispositif de transport, comme décrit dans le document D1 (DE102014012528A1), le dispositif de transport de type rotatif se présente sous la forme d'une roue comportant au moins un plateau mobile qui comporte circonférentiellement des encoches qui, ouvertes radialement vers l'extérieur, sont destinées à recevoir au moins le col d'une préforme (ou d'un récipient).

Pour s'opposer aux effets de la force centrifuge lorsque le plateau mobile est entraîné en rotation dans le but de transporter les préformes, un guide fixe est agencé radialement à l'extérieur du plateau pour maintenir les cols dans les encoches.

Dans un dispositif de transport selon cette première conception, les préformes sont généralement supportées axialement par l'intermédiaire d'une collerette annulaire que présente le col mais ne sont cependant pas immobilisées, en particulier ne sont pas bloquées en rotation.

Les préformes restent ainsi libres de bouger, de tourner sur elle-même, de sorte que la position angulaire d'une préforme est susceptible de varier au cours de son transport.

Pour cette raison notamment, un dispositif de transport selon cette première conception ne peut être utilisé dans tous types d'application.

En effet, certaines applications nécessitent d'orienter géométriquement la préforme afin de pouvoir garantir que la préforme occupe angulairement une position de référence qui est déterminée par rapport à son axe principal.

Tel est en particulier le cas lorsque l'on souhaite obtenir, lors de l'étape de conditionnement thermique, une chauffe circonférentiellement non-uniforme du corps de la préforme.

A titre d'exemple non limitatif, on pourra se reporter au document WO-94/23932 qui décrit un tel procédé de rotation, conditionnement (ou de traitement) thermique de préformes, encore appelé « chauffe préférentielle ».

Un tel procédé du type « chauffe préférentielle » est plus particulièrement utilisé pour la fabrication de récipients ne présentant pas une section globalement cylindrique de révolution, mais par exemple une section transversale polygonale (notamment quadrangulaire ou autres) comportant une ou des faces approximativement planes, ou bien encore un corps aplati.

Dans un procédé du type chauffe préférentielle, un chauffage sélectif est réalisé pour créer sur le corps de la préforme une ou des zones relativement plus chaudes qui alternent circonférentiellement avec des zones intercalaires relativement moins chaudes.

L'objectif est que les zones relativement plus chaudes se déforment plus facilement que les autres au cours du moulage du corps de la préforme par soufflage ou par étirage-soufflage pour le formage du récipient.

Pour contrôler le chauffage sélectif sur le corps de la préforme et obtenir les zones plus ou moins chaudes, on détermine une position de référence de la préforme pour laquelle lesdites zones plus ou moins chaudes présentent angulairement autour de l'axe principal la répartition souhaitée et déterminée en fonction du récipient à fabriquer.

Pour une telle application nécessitant d'orienter angulairement la préforme, on ne peut utiliser un dispositif de transport selon la première conception dès lors que, la préforme n'étant pas immobilisée, sa position angulaire est susceptible de varier de manière aléatoire au cours de son transport.

L'une des possibilités est alors d'utiliser un dispositif de transfert selon une deuxième conception.

Selon la deuxième conception, le dispositif de transfert comporte une partie mobile formant une roue qui, entraînée en comporte circonférentiellement des pinces destinées à assurer une préhension des préformes.

Comme décrit dans le document D2 (US2018015657A1), la pince peut comprendre un mors fixe et un mors mobile.

L'ouverture des pinces est préférentiellement commandée sélectivement à l'encontre de moyens de rappel élastique qui sollicitent les mors vers une fermeture de la pince, ladite ouverture étant par exemple commandée par un mécanisme de commande de type à galet et à came.

La préhension de la préforme par les mors de la pince s'effectue par exemple axialement en dessous de la collerette du col de la préforme, la préforme étant dans ce cas en appui axial sur les mors par l'intermédiaire de sa collerette.

Alternativement, comme décrit dans le document D2, le mors fixe supporte la préforme en dessous de la collerette et le mors mobile saisit la préforme par son corps.

Dans un tel dispositif de transfert, la préforme est maintenue axialement en position tout en étant immobilisée en rotation par un effort de serrage qui est appliqué radialement par les mors de la pince.

Si un tel dispositif de transport donne généralement satisfaction, il présente toutefois des inconvénients pour le transport de préformes avec une position angulaire donnée comme cela est nécessaire pour un procédé de conditionnement thermique du type chauffe préférentielle.

Tout d'abord, il faut que les mors de la pince appliquent un effort de serrage suffisant pour garantir le maintien en position de la préforme lors de son transport. D'une manière générale, un effort de serrage par les mors peut laisser des marques sur la partie de la préforme qui est serrée.

En effet, comme on recherche à réduire la quantité de matière thermoplastique utilisée pour la fabrication des préformes, les préformes présentent une moindre épaisseur, les cols des d'un four de conditionnement thermique de préformes pose des problèmes de mise en œuvre de l'opération dite de « vêtissage ».

On rappelle que l'opération de vêtissage consiste à transférer les préformes dudit dispositif de transport vers le dispositif de convoyage que comporte le four.

Lors de l'opération de vêtissage, la prise par un organe de préhension du dispositif de convoyage du col de la préforme s'accompagne d'efforts axiaux importants transmis à la pince, ledit organe de préhension étant par exemple introduit axialement à l'intérieur de l'ouverture délimitée par le col de la préforme.

De plus, la synchronisation de l'ouverture de la pince pour libérer la préforme lors du vêtissage de la préforme par l'organe de préhension engendre souvent des problèmes de fiabilité, lesquels sont d'autant plus importants que les cadences de fabrication ne cessent de croître.

L'un des problèmes rencontrés avec les pinces est également le risque que la position de la préforme soit modifiée lors de son transfert hors la pince, or un décalage angulaire par rapport à ladite position de référence a des conséquences directes sur la précision de la chauffe préférentielle et au final la qualité du récipient obtenu.

Enfin, lorsqu'une intervention de changement de format, c'est-à-dire de changement des pièces de « personnalisation » comme les mors des pinces et la came du mécanisme de commande, est réalisée pour configurer le dispositif de transport en vue du transport d'un autre type de préforme, cette intervention est jugée trop longue.

En effet, dans un dispositif de transport à pinces, il faut procéder à une intervention sur chacune des pinces ainsi que sur le mécanisme de commande qui est souvent peu accessible.

Le changement des pièces exige par conséquent un temps d'arrêt important de l'ensemble de l'installation de fabrication pour effectuer de tels démontages et montages desdites pièces de personnalisation, ce qui s'avère en outre particulièrement préjudiciable sur le plan économique.

On observe de surcroît que de tels changements de format sont souvent plus fréquents dans une installation de fabrication mettant en œuvre une chauffe préférentielle pour la fabrication de récipients non cylindrique de révolution que dans d'autres installations de fabrication.

C'est la raison pour laquelle, on a déjà proposé dans l'art antérieur différents perfectionnements (par exemple « fixations rapides ») pour tenter de réduire la durée des interventions de changement desdites pièces de personnalisation d'un dispositif de transport de type rotatif pour des préformes et cela d'ailleurs quel que soit que le type de dispositif de transport, à pinces selon la deuxième conception ou avec encoches comme selon la première conception.

A défaut d'avoir une solution satisfaisante pour les raisons qui viennent d'être indiquées avec l'utilisation de dispositif de transport à pinces, l'opération d'orientation est réalisée à l'intérieur même du four.

Dans les installations de fabrication de récipients de la Demanderesse, l'orientation des préformes pour les applications nécessitant une chauffe préférentielle est ainsi réalisée à l'intérieur même du four.

En effet, on évite alors d'avoir à utiliser des dispositifs de transport à pinces qui présentent les inconvénients décrits précédemment lorsqu'un changement de format est souhaité ou encore pour réaliser l'opération de vêtissage en entrée du four.

Toutefois, une telle solution d'orientation des préformes dans le four présente également des inconvénients à commencer par le fait de réduire la longueur du parcours de chauffe pendant lequel une chauffe préférentielle est effectivement réalisée.

L'orientation des préformes est en effet réalisée après le vêtissage sur le tronçon du parcours de chauffe correspondant au

Toutefois, une telle solution d'orientation des préformes dans le four présente également des inconvénients à commencer par le fait de réduire la longueur du parcours de chauffe pendant lequel une chauffe préférentielle est effectivement réalisée.

L'orientation des préformes est en effet réalisée après le vêtissage sur le tronçon du parcours de chauffe correspondant au chauffage de pénétration de sorte que la chauffe préférentielle est au mieux réalisée sur le reste du parcours.

Une telle solution d'orientation intégrée dans le four présente l'inconvénient de limiter les cadences maximales de fabrication pouvant être atteintes.

Par conséquent, on recherche des solutions pour proposer de nouvelles conceptions de dispositifs de transport afin de pouvoir réaliser une orientation des préformes en amont du four, sans toutefois avoir à utiliser un dispositif de transport à pinces en raison des inconvénients que cela présente.

D'une manière générale, on cherche à concevoir des dispositifs de transport permettant en outre de contrôler avec précision et fiabilité l'orientation d'une préforme, en particulier pour ensuite mettre en œuvre un conditionnement thermique du type chauffe préférentielle dans le four.

Le document D3 (DE102013014618A1) décrit un dispositif de sécurité pour des stations de transfert d'une installation de soufflage et plus particulièrement, les stations de transfert de récipient comprennent des éléments de maintien utilisant le vide.

Le document D4 (US4793960A) décrit un procédé de fabrication de préformes par injection comprenant une étape de transfert des préformes injectés vers un poste de soufflage, la étape de transfert utilisant des éléments de maintien utislisant le vide.

Le but de l'invention est notamment de proposer une nouvelle conception de dispositif de transport permettant de résoudre au moins une partie des inconvénients de l'état de la technique tout en conservant un dispositif de transport qui soit avantageusement simple, fiable et économique à fabriquer. partie du corps de ladite préforme une force d'immobilisation afin d'immobiliser ladite préforme en position.

Selon l'invention, il est proposé un dispositif de transport de type rotatif pour des préformes en matière thermoplastique comportant au moins un corps et un col, ledit dispositif de transport comporte au moins des moyens de support qui sont configurés pour coopérer avec une collerette du col de la préforme, lesquels moyens (130, 132, 136) de support comprennent au moins des moyens (132) mobiles destinés à être entraînés en rotation autour d'un axe (O) de rotation pour transporter lesdites préformes (10) d'une entrée (E) jusqu'à une sortie (S) dudit dispositif, moyens de support maintenant axialement ladite préforme lors du transport le dispositif comprenant des moyens d'immobilisation distincts des moyens de support, configurés pour appliquer sélectivement sur une partie du corps de ladite préforme une force d'immobilisation obtenue par dépression afin d'immobiliser ladite préforme en position par rapport aux moyens mobiles, remarquable en ce que les moyens d'immobilisation par dépression comportent au moins : une partie mobile comportant une face externe dans laquelle débouchent radialement des orifices formant ventouse, chacun desdits orifices d'aspiration étant relié sélectivement à une source de vide pour obtenir une dépression au niveau dudit orifice par aspiration de l'air afin de générer ladite force d'immobilisation aui est appliauée sur au moins une partie du corps pour immobiliser la préforme : une partie fixe, complémentaire de la partie mobile, dans laquelle est aménagée au moins une chambre d'aspiration qui est reliée à ladite source de vide afin de pouvoir être mise en dépression, ladite partie fixe des moyens d'immobilisation par dépression comporte au moins un anneau et un disque, ledit anneau présentant en coupe axiale selon un plan radial une forme en « U » inversé délimitant intérieurement ladite chambre d'aspiration que ledit disque vient fermer axialement par en dessous..

Avantageusement, le moyen de support permet de bien positionner axialement le corps de la préforme, c'est-à-dire que l'axe A principal de la préforme doit être parallèle à l'axe O de rotation pour transporter les préformes, afin d'assurer une bonne force d'immobilisation obtenue par dépression. En d'autres termes, la combinaison du moyen de support et du moyen d'immobilisation permet d'obtenir une force d'immobilisation par dépression de la préforme.

Avantageusement, un dispositif de transport selon l'invention permet de garantir, avec fiabilité et précision, la conservation pendant tout le transport de la position angulaire occupée par une préforme autour de son axe longitudinal.

De préférence, une détection de moyens d'indexation des préformes est effectuée lors du chemin parcouru entre l'entrée et la sortie du dispositif de transport. En variante, la détection est réalisée en amont du dispositif de transport.

Avantageusement, l'opération d'orientation d'une préforme dans une position angulaire de référence déterminée pour un conditionnement thermique de type chauffe préférentielle est réalisée en aval du dispositif de transport.

Avantageusement, le dispositif de transport est conçu pour permettre d'effectuer rapidement un changement des pièces de personnalisation configurées en fonction des caractéristiques géométriques des préformes.

Selon d'autres caractéristiques du dispositif de transport selon l'invention :
la partie mobile comporte une série de logements qui sont chacun ménagés dans ladite face externe autour d'au moins un desdits orifices d'aspiration, lesdits logements étant répartis circonférentiellement et configurés pour recevoir chacun au moins une partie du corps d'une préforme.
l'anneau comporte au moins une lumière qui détermine un secteur angulaire d'aspiration dans lequel une partie desdits orifices d'aspiration est mise en communication avec ladite chambre d'aspiration en dépression.
chaque orifice d'aspiration est relié par un perçage à une cavité interne destinée à être mise sélectivement en communication avec ladite chambre d'aspiration en dépression.
le dispositif comporte des moyens de stabilisation pour faciliter l'immobilisation des préformes par lesdits moyens d'immobilisation.
le dispositif est du type dans lequel le col de chaque préforme comporte des moyens d'indexation destinés à permettre d'orienter angulairement ladite préforme dans une position de référence, caractérisé en ce que le dispositif comporte un système de détection optique qui est apte à déterminer la position angulaire des moyens d'indexation d'au moins une préforme.
les moyens de support des préformes comportent au moins :
   ∘ lesdits moyens mobiles comportant des encoches configurées pour coopérer avec une portion de ladite collerette du col d'une préforme, et
   ∘ des moyens fixes comportant un bord configuré pour coopérer avec une autre portion de ladite collerette du col de chacune des préformes, lesdits moyens fixes étant agencés radialement en vis-à-vis des moyens mobiles de manière à délimiter entre eux un espace déterminé formant un chemin parcouru par les préformes lors du transport.

Le fait que les moyens de support comprennent des moyens radialement en vis-à-vis l'un de l'autre et coopérant l'un et l'autre avec la collerette permet que l'axe A longitudinal de la préforme soit correctement positionné par simple gravité de manière parallèle à l'axe O de rotation des moyens de support mobiles. Le fait de garantir ce parallélisme permet à des moyens d'aspiration de correctement immobiliser la préforme.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :

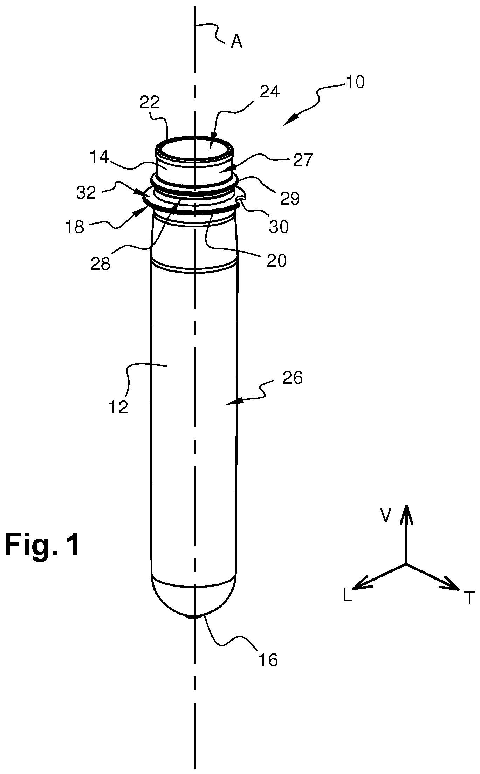

- la figure 1 est une vue en perspective qui représente un exemple de réalisation d'une préforme en matière thermoplastique et qui illustre en outre des moyens d'indexation formés par au moins une encoche dans une collerette pour permettre d'orienter angulairement la préforme dans une position de référence ;

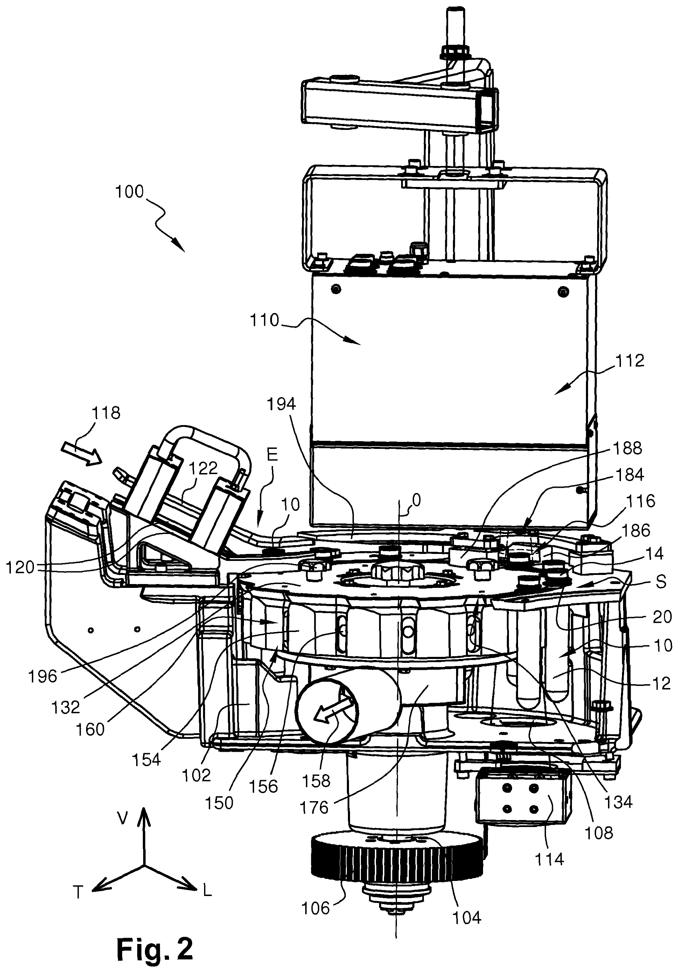

- la figure 2 est une vue en perspective qui représente un dispositif de transport selon un premier mode de réalisation préféré de l'invention dans lequel des moyens de support sont associés à des moyens d'immobilisation par dépression et qui illustre également un système de détection optique équipant ledit dispositif pour effectuer une détection de la position angulaire desdits moyens d'indexation d'une préforme lors de son transport ;

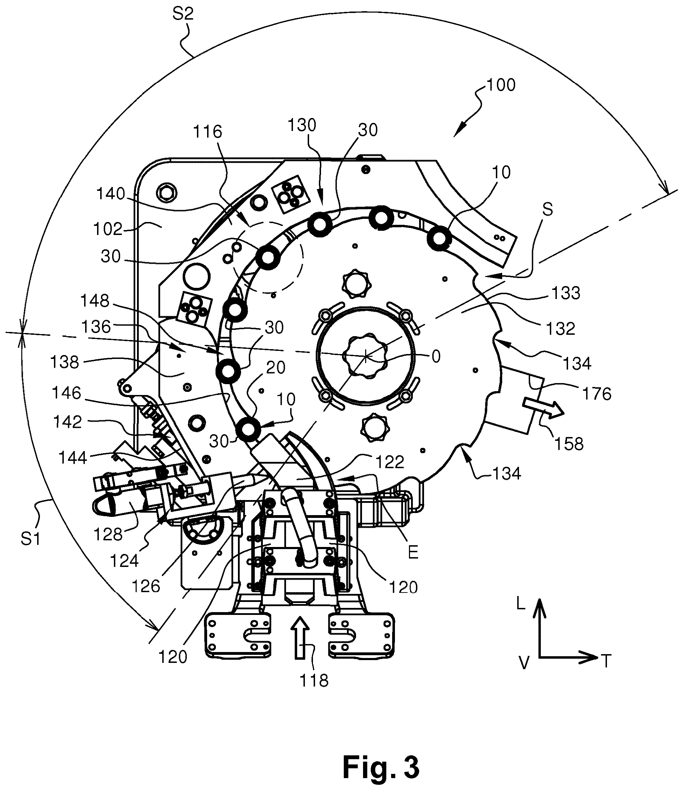

- la figure 3 est une vue de dessus qui représente un dispositif de transport selon la figure 2 dans lequel le système de détection optique, des moyens de stabilisation et de guidage des préformes ont été ôtés pour rendre visible les préformes en cours de transport et qui illustre lesdites préformes parcourant le chemin délimité par les moyens de support comportant respectivement des moyens mobiles et des moyens fixes supportant chacun les préformes en coopérant avec une partie du col de chacune des préformes qui est préférentiellement formée par une collerette radiale ;

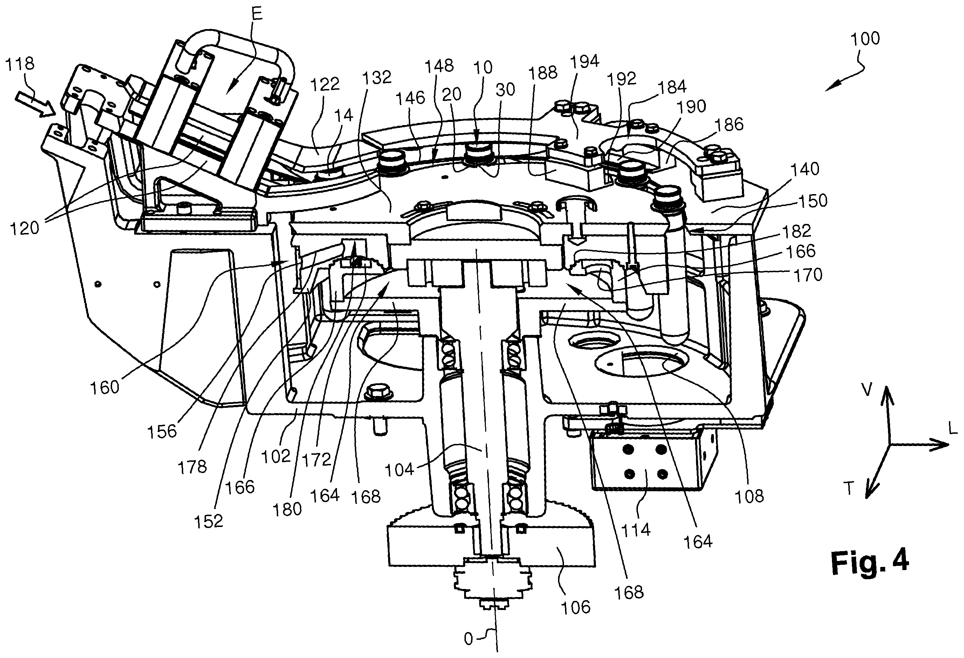

- la figure 4 est une vue en perspective qui représente une coupe du dispositif de transport passant notamment en amont de l'entrée du dispositif par un poste vide (sans préforme) et qui illustre une conception desdits moyens d'immobilisation par dépression selon le premier mode de réalisation ;

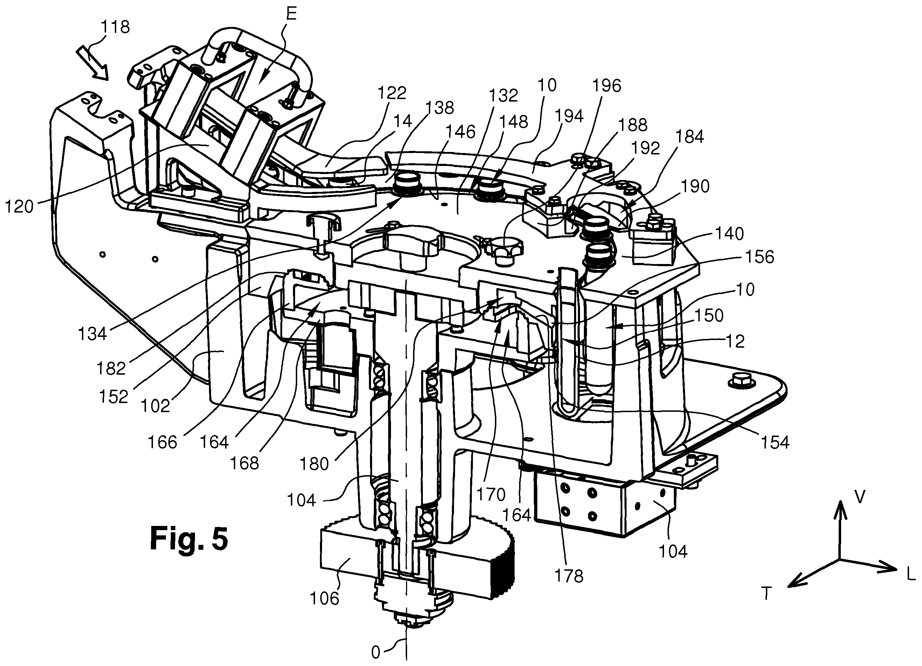

- la figure 5 est une vue en perspective qui représente une autre coupe du dispositif de transport passant notamment en amont de la sortie par un poste comportant une préforme en position et qui illustre ladite préforme maintenue axialement par les moyens de support et immobilisée en rotation par lesdits moyens d'immobilisation par dépression ;

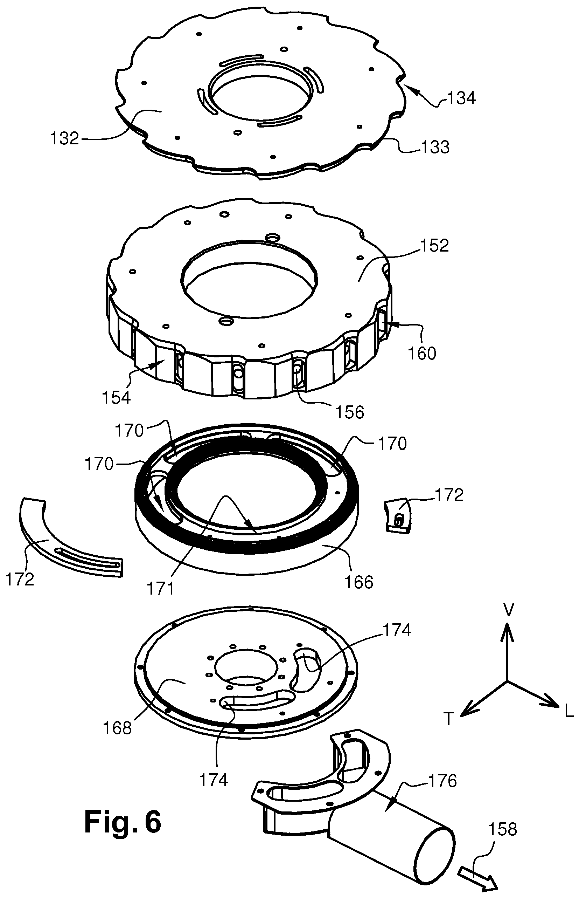

- la figure 6 est une vue en éclaté qui représente une partie des pièces principales formant les moyens de support et les moyens d'immobilisation par dépression et qui illustre en détail la conception desdites pièces selon le premier mode de réalisation ;

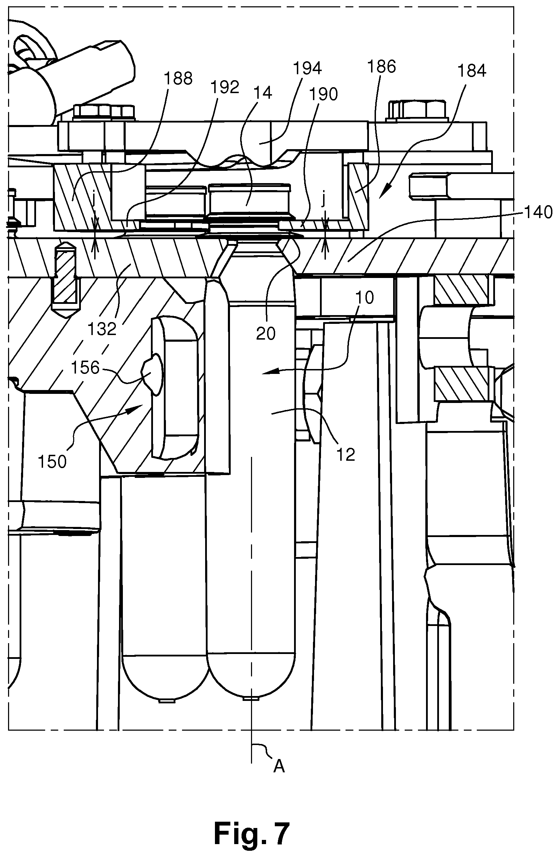

- la figure 7 est une vue en perspective qui représente une coupe du dispositif de transport réalisée au niveau des moyens de stabilisation et qui illustre en détail un exemple de réalisation desdits moyens de stabilisation des préformes avantageusement agencés en amont de la zone de détection des moyens d'indexation par ledit système de détection optique ;

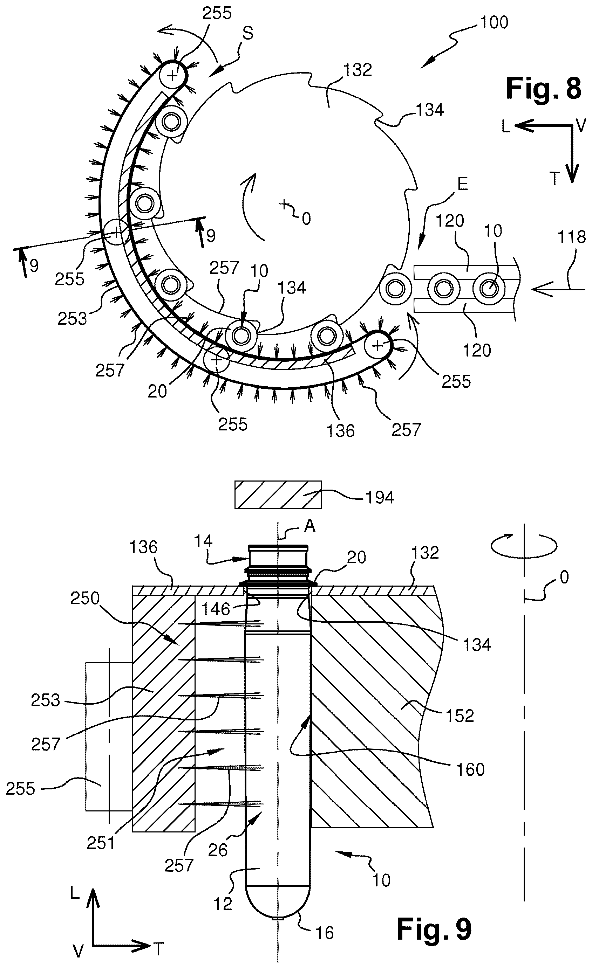

- les figures 8 et 9 sont respectivement une vue de dessus et une vue en coupe axiale selon la direction radiale qui représentent un dispositif de transport selon un deuxième mode de réalisation et qui illustrent des moyens d'immobilisation par frottement formés par des brosses.

### DESCRIPTION DETAILLEE DES FIGURES

Dans la suite de la description, on adoptera à titre non limitatif les orientations longitudinale, verticale et transversale en référence au trièdre (L, V, T) représenté sur les figures.

Par convention, la direction « axiale » correspond l'orientation verticale du trièdre (L, V, T) et la direction « radiale » est orthogonale à ladite direction axiale, c'est dire comprise dans un plan (L, T) selon les orientations longitudinale et transversale.

La direction radiale est notamment déterminée par rapport à l'axe (O) de rotation du dispositif de transport ou encore l'axe (A) principal d'une préforme.

Les termes « intérieur » ou « extérieur » et « interne » ou « externe » sont utilisés en référence à la direction radiale.

Par comparaison à un élément « extérieur » ou « externe », un élément est dit « intérieur » ou « interne » lorsqu'il est plus proche de l'axe (O) de rotation du dispositif de transport ou de l'axe (A) principal d'une préforme.

On utilisera également à titre non limitatif les termes « supérieur » et « inférieur » ou « haut » et « bas » en référence à l'orientation verticale.

On a représenté sur la figure 1, un exemple de réalisation d'une préforme 10 en matière thermoplastique.

Une telle préforme 10 est généralement fabriquée par moulage par injection de matière thermoplastique, notamment en PET acronyme de « *Polyéthylène Téréphtalate ».*

De manière connue et tel que rappelé en préambule, une telle préforme 10 en matière thermoplastique est destinée à être transformée en un récipient creux, tel qu'une bouteille, un flacon, un pot, pouvant présenter des formes géométriques variées, qui pour certain type de section non cylindrique nécessite de réaliser une chauffe préférentielle.

La préforme 10 présente un axe A principal qui s'étend verticalement selon le trièdre (L, V, T) représenté sur la figure 1, c'est-à-dire également selon la direction axiale.

La préforme 10 comporte un corps 12 creux et un col 14.

Le col 14 de la préforme 10 en constitue une extrémité ouverte tandis que le corps 12 en constitue une extrémité fermée axialement, à l'opposé dudit col 14, par un fond 16.

Le col 14 comporte une surface 18 d'appui par l'intermédiaire de laquelle la préforme 10 est susceptible d'être supportée axialement.

Avantageusement, le col 14 de la préforme 10 comporte au moins une collerette 20 annulaire. La collerette 20 est située dans une zone de jonction du col 14 avec le corps 12 et s'étend radialement en saillie vers l'extérieur, notamment par rapport au corps 12.

De préférence, la surface 18 d'appui de la préforme 10 est formée par une face inférieure de ladite collerette 20.

Tel qu'illustré notamment sur la figure 1, la préforme 10 est en position verticale avec une orientation dite « col en haut ».

Le col 14 comporte un bord 22 supérieur (ou buvant) qui délimite circonférentiellement une ouverture 24 communiquant avec l'intérieur du corps 12 creux de la préforme 10.

Le corps 12 de la préforme 10 présente une forme globalement cylindrique et comporte une surface 26 externe.

Sur la figure 1, le col 14 de la préforme 10 comporte une partie supérieure présentant une surface 27 externe lisse.

En variante, la surface 27 externe du col 14 comporte un filetage destiné à permettre notamment la fermeture du récipient par vissage, par exemple par un bouchon à vis ou encore un pistolet pulvérisateur.

Le col 14 comporte une gorge 28 qui, délimitée axialement vers le bas par la collerette 20 et vers le haut par une bague 29 annulaire, est par exemple destinée à recevoir une bague d'inviolabilité temporairement solidaire d'un bouchon jusqu'à une première ouverture du récipient.

Tel qu'expliqué en préambule, il est nécessaire pour fabriquer certaines formes de récipients de réaliser un conditionnement thermique du corps 12 différencié dit « chauffe préférentielle » afin d'obtenir sur le corps 12 des zones plus ou moins chaudes.

Un tel conditionnement thermique du corps avec une « chauffe préférentielle » nécessite cependant de pouvoir orienter la préforme 10 afin de disposer d'une référence permettant de contrôler la répartition angulaire desdites zones plus ou moins chaudes autour de l'axe A de la préforme.

C'est la raison pour laquelle, certaines préformes comme la préforme 10 illustrée sur la figure 1 comportent des moyens 30 d'indexation angulaire.

Les moyens 30 d'indexation angulaire de la préforme 10 sont destinés à permettre d'orienter angulairement la préforme 10 autour de son axe A dans une position de référence déterminée.

Les moyens 30 d'indexation sont agencés au niveau du col 14 de la préforme 10.

De préférence et tel qu'illustré sur la figure 1, les moyens 30 d'indexation sont agencés au niveau de la collerette 20 de la préforme 10.

En effet, le col 14 présente sa forme définitive (celle du récipient) de sorte que lesdits moyens 30 d'indexation permettent non seulement d'orienter angulairement la préforme 10 mais également d'orienter ensuite le récipient (bouteille, flacon, etc.) obtenu à partir d'une telle préforme.

Les moyens 30 d'indexation comportent au moins un élément d'indexation configuré pour permettre une détermination de ladite position de référence de la préforme 10, notamment mais non exclusivement par une détection de type optique.

Dans l'exemple représenté sur la figure 1, les moyens 30 d'indexation de la préforme 10 comportent un unique élément d'indexation et qui est ici de type femelle.

En variante non représentée, la préforme 10 comporte deux éléments d'indexation, qui sont alors préférentiellement agencés diamétralement à l'opposé l'un de l'autre par rapport à l'axe A de la préforme 10.

Les moyens 30 d'indexation sont par exemple constitués par au moins une encoche réalisée dans la collerette 20 et s'ouvrant radialement vers l'extérieur.

Selon une variante non représentée, les moyens 30 d'indexation sont de type mâle, tel qu'un ergot, formant ledit au moins un élément d'indexation.

Un tel ergot est par exemple réalisé venu de matière, en une seule pièce, avec la collerette 20 et s'étend en saillie à partir d'une surface 32 supérieure de la collerette 20, axialement opposée à la surface 18 d'appui.

Les moyens 30 d'indexation ont pour fonction de permettre d'orienter angulairement la préforme 10 dans la position de référence déterminée.

Une telle préforme 10 est destinée à être transformée en un récipient dans une installation de fabrication de récipients à l'intérieur de laquelle les préformes 10 sont notamment transportées par l'intermédiaire de dispositifs de transport de type rotatif.

On a représenté sur les figures 2 et suivantes, un dispositif 100 de transport de type rotatif pour des préformes 10 en matière thermoplastique selon un premier mode de réalisation de l'invention.

Le dispositif 100 de transport de type rotatif présente un axe O de rotation ainsi qu'une entrée E et une sortie S qui sont notamment représentées sur la figure 2 ou 3.

Le dispositif 100 de transport est notamment mais non exclusivement apte à transporter des préformes 10 du type de celle représentée à la figure 1, c'est-à-dire une préforme 10 comportant des moyens 30 d'indexation.

Le dispositif 100 de transport selon le premier mode de réalisation qui va être décrit ci-après est plus particulièrement destiné à équiper une installation (non représentée) de fabrication de récipients présentant une section non-cylindrique de révolution.

Dans une telle installation, le conditionnement thermique des préformes 10 est par conséquent réalisé selon un procédé de type « chauffe préférentielle » ce qui nécessite d'orienter angulairement la préforme 10 dans une position de référence pour contrôler la répartition des zones chaudes et moins chaudes.

Avantageusement, le dispositif 100 de transport selon le premier mode de réalisation est destiné à être agencé en amont d'un four de conditionnement thermique d'une telle installation.

De préférence, le dispositif 100 de transport est agencé directement en amont du four de manière que l'opération de vêtissage des préformes 10, qui consiste à les transférer vers le dispositif de convoyage, soit réalisée directement à la sortie S dudit dispositif 100.

Le dispositif 100 de transport comporte un châssis 102 dont une partie présente globalement une forme circulaire en cuvette, c'est-à-dire évidée centralement pour recevoir une partie des pièces dudit dispositif.

Le dispositif 100 de transport de type rotatif comporte en outre un arbre 104 d'entraînement destiné à être relié à des moyens d'entraînement en rotation (non représentés) tels qu'un moteur.

L'arbre 104 d'entrainement comporte un pignon 106 apte à être entraîné par engrènement par l'intermédiaire d'une courroie de transmission afin d'assurer l'entraînement en rotation de l'arbre 104 autour de l'axe O de rotation du dispositif 100 de transport.

Le châssis 102 comporte une fenêtre 108 qui, ici de forme circulaire, est ménagée dans une base du châssis.

Avantageusement, le dispositif 100 de transport comporte un système 110 de détection optique qui est apte à déterminer la position angulaire des moyens 30 d'indexation d'une préforme 10.

Dans le cas d'une préforme 10 selon la figure 1, lesdits moyens 30 d'indexation sont formés par une encoche qui est réalisée dans la collerette 20 s'étendant radialement en saillie par rapport au corps 12 et au col 14.

De préférence, le système 110 de détection optique comporte au moins un appareil 112 de prise de vues, tel qu'une caméra électronique, logé ici dans un boîtier de forme parallélépipédique et qui est par exemple fixé de manière suspendu à une potence.

Le système 110 de détection optique comporte une unité de traitement d'images (non représentée) à laquelle est relié ledit appareil 112 de prise de vues.

Avantageusement, le système 110 de détection optique comporte une source 114 d'éclairage qui est associée à l'appareil 112 de prise de vues.

Tel qu'illustré sur la figure 1, la source 114 d'éclairage est fixée sur le châssis 102 de manière à éclairer, à travers ladite fenêtre 108, les préformes 10 transportées par en-dessous.

L'appareil 112 de prise de vues et la source 114 d'éclairage du système 110 de détection optique déterminent ensemble une zone 116 de détection des moyens 30 d'indexation d'au moins une préforme 10, ladite zone 116 de détection étant représentée par un cercle en trait pointillés sur la figure 3.

Pour de plus amples détails sur la réalisation et le fonctionnement d'un système 110 de détection optique, on pourra se reporter au document US-8.620.062 qui est toutefois donné à titre d'exemple non limitatif.

Le système 110 de détection optique a pour fonction de réaliser une étape de détection dont les données sont ensuite exploitées pour effectuer une étape d'orientation de chaque préforme dans une position de référence déterminée.

L'étape d'orientation est ainsi réalisée en aval du dispositif 100 de transport par l'intermédiaire de moyens appropriés, en particulier apte à entraîner sélectivement en rotation chaque préforme 10 pour l'amener dans ladite position de référence.

Le dispositif 100 de transport comporte un dispositif 118 d'alimentation en préformes 10, ledit dispositif 118 d'alimentation étant représenté schématiquement par une flèche sur les figures 2 et 3.

On connait de nombreux dispositifs d'alimentation en préformes, notamment par l'intermédiaire de rails entre lesquels les préformes se déplacent par exemple par gravité.

Le document WO-2016/166459 décrit un autre exemple de dispositif d'alimentation de préformes.

Le dispositif 100 de transport comporte au niveau de son entrée E deux rails 120 destinés à être alimentés en préformes par le dispositif 118 d'alimentation.

Les rails 120 présentent entre eux un écartement qui est déterminé pour que les préformes 10 orientées « col en haut » soient axialement en appui par une partie de leur collerette 20 sur une face supérieure de chacun des rails 120, les préformes 10 sont ainsi suspendues par l'intermédiaire de leur collerette 20.

Les préformes 10 sont agencées les unes à la suite des autres entre les rails 120, en une file, avant d'être prises en charge par le dispositif 100 de transport au niveau de l'entrée E et acheminées jusqu'à la sortie S.

Avantageusement, des moyens 122 de guidage sont agencés axialement au-dessus des rails 120 afin de guider si nécessaire les cols 14 des préformes 10.

De préférence, le dispositif 100 de transport comporte un dispositif 124 de blocage des préformes 10 qui est apte à interrompre l'alimentation en préformes par le dispositif 118 d'alimentation.

Tel que représenté sur la figure 3, le dispositif 124 de blocage comporte au moins un doigt 126 de blocage qui est monté mobile en translation entre une position inactive et une position active de blocage dans laquelle le doigt 126 vient s'étendre en travers des rails 120 de manière à bloquer la file de préformes 10.

Le doigt 126 de blocage est par exemple commandé entre lesdites positions inactive et active de blocage par l'intermédiaire d'un actionneur 128, tel qu'un vérin pneumatique ou un moteur linéaire.

Le dispositif 100 de transport comporte des moyens 130 de support qui sont configurés pour coopérer avec une partie du col 14 de la préforme 10 afin de maintenir axialement ladite préforme 10 lors du transport.

Avantageusement, ladite partie du col 14 de la préforme 10 avec laquelle coopèrent les moyens 130 de support est constituée par une partie de la collerette 20.

Les moyens 130 de support des préformes 10 comportent au moins des moyens 132 mobiles de support qui sont liés en rotation à l'arbre 104 d'entraînement du dispositif 100 de transport.

Avantageusement, les moyens 132 mobiles de support comporte au moins un plateau qui est susceptible d'être entraîné en rotation autour de l'axe O de rotation pour transporter lesdites préformes 10 de l'entrée E jusqu'à la sortie S.

De préférence, les moyens 132 mobiles de support comportent un plateau. Le plateau 132 comporte un bord 133 extérieur dans lequel sont ménagées des encoches 134.

Tel qu'illustré sur la figure 3, les encoches 134 sont réparties circonférentiellement de manière régulière.

Les encoches 134 sont configurées pour coopérer avec une portion de ladite partie du col 14 d'une préforme 10.

Avantageusement, ladite partie du col 14 de la préforme 10 avec laquelle coopèrent les moyens 130 de support est constituée par la collerette 20 comportant la surface 18 d'appui axial pour la préforme 10.

Les moyens 130 de support des préformes 10 comportent des moyens 136 fixes de support qui sont associés aux moyens 132 mobiles de support formés par ledit au moins un plateau.

Par comparaison avec les moyens 132 mobiles de support, les moyens 136 fixes de support ne sont pas entraînés en rotation autour de l'axe O par l'arbre 104 d'entraînement.

De préférence, les moyens 136 fixes de support sont réalisés en deux pièces complémentaires, respectivement une première pièce 138 de support et une deuxième pièce 140 de support.

Avantageusement, le dispositif 100 de transport comporte des moyens 142 d'éjection afin de permettre d'éliminer les préformes 10, par exemple en cas d'incident de fonctionnement tel que le coincement d'au moins une préforme.

Les moyens 142 d'éjection sont formés par la première pièce 138 de support qui est montée mobile entre une position de support et une position d'éjection.

De préférence, la pièce 138 de support est montée pivotante par rapport au châssis 102 entre lesdites positions de support et d'éjection.

La pièce 138 de support est commandée sélectivement en déplacement entre lesdites positions de support et d'éjection par un actionneur 144, tel qu'un vérin pneumatique.

La deuxième pièce 140 de support est fixée de manière démontable sur le châssis 102, par exemple par vissage.

Les moyens 136 fixes de support comportent un bord 146 intérieur configuré pour coopérer avec une autre portion de ladite partie du col 14 qui est avantageusement formée par la collerette 20 de chacune des préformes 10.

Le bord 146 intérieur comporte un premier tronçon appartenant à la première pièce 138 de support et un deuxième tronçon appartenant à la deuxième pièce 140 de support.

Les moyens 136 fixes de support sont agencés radialement en vis-à-vis du plateau 132 mobile de manière à délimiter entre eux un espace déterminé formant un chemin 148 parcouru par les préformes 10 lors du transport.

Le chemin 148 présente une forme en arc de cercle qui s'étend depuis l'entrée E jusqu'à la sortie S.

Le diamètre externe de la collerette 20 est supérieur à l'écartement délimité radialement de part et d'autre par le bord 146 intérieur des moyens 136 fixes de support et par le bord 133 extérieur du plateau 132 mobile muni des encoches 134.

Le dispositif 100 de transport comporte des moyens 150 d'immobilisation qui sont distincts desdits moyens 130 de support.

Les moyens 150 d'immobilisation sont configurés pour appliquer sélectivement sur ladite préforme 10, avantageusement sur une partie du corps 12, une force d'immobilisation afin d'immobiliser ladite préforme 10 en position, de la bloquer en rotation.

Les moyens 150 d'immobilisation sont destinés à garantir que chaque préforme 10 soit immobilisée en position, ici avant de parvenir dans la zone 116 de détection du système 110 de détection optique.

Avantageusement, l'immobilisation de la préforme 10 participe à une bonne détection des moyens 30 d'indexation de chacune des préformes 10 mais surtout à maintenir ensuite ladite préforme 10 dans la position occupée lors de la détection par le système 110 des moyens 30 d'indexation.

Tel qu'illustré sur la figure 3, les moyens 30 d'indexation des préformes 10 engagées dans le chemin 148 occupent une position qui est aléatoire, c'est-à-dire qui varie d'une préforme à une autre.

L'immobilisation de chaque préforme 10 dans la position occupée lors de la détection des moyens 30 d'indexation garantit ensuite de pouvoir l'entraîner sélectivement en rotation pour la placer dans ladite position de référence utilisée lors du conditionnement thermique de type « chauffe préférentielle ».

La force d'immobilisation avantageusement appliquée sur le corps 12 pour immobiliser la préforme 10 est susceptible d'être obtenue de différentes manières.

Dans le premier mode de réalisation représenté sur les figures, la force d'immobilisation appliquée est avantageusement obtenue par dépression.

Les moyens 150 d'immobilisation fonctionnent par dépression, c'est-à-dire par une aspiration de l'air.

De préférence, lesdits moyens 150 d'immobilisation par dépression n'interviennent pas immédiatement dès l'entrée E du dispositif 100 de transport de manière à optimiser la consommation liée à l'aspiration d'air.

Avantageusement, les moyens 150 d'immobilisation par dépression sont inactifs dans un premier secteur S1 angulaire qui, situé après l'entrée E, est illustré sur la figure 3.

Le premier secteur S1 angulaire correspond à tout ou partie du tronçon du chemin 148 délimité radialement à l'extérieur par la première pièce 138 de support.

Lorsque les préformes 10 parcourent le premier secteur S1, les préformes 10 n'ont généralement pas nécessairement une position droite et stable, en particulier le corps 12 des préformes 10 est susceptible de se déplacer radialement sous l'effet de la force centrifuge et cela bien qu'étant axialement en appui par l'intermédiaire de sa collerette 20 sur les moyens 130 de support.

Dans ces conditions, la précision de la détection des moyens 30 d'indexation d'une préforme 10 par le système 110 de détection optique est susceptible de s'en trouver impactée.

C'est l'une des raisons pour laquelle, le dispositif 100 de transport comporte des moyens 150 d'immobilisation configurés pour obtenir par dépression ladite force d'immobilisation de la préforme 10.

Les moyens 150 d'immobilisation par dépression sont illustrés par les figures 4 et 5 ainsi que sur l'éclaté de la figure 6.

Les moyens 150 d'immobilisation par dépression selon ce premier mode de réalisation comportent au moins une partie 152 mobile qui est liée en rotation à l'arbre 104 d'entraînement. La partie 152 mobile est par exemple formée par une couronne.

La couronne 152 comporte sur son pourtour une face 154 externe dans laquelle débouchent radialement des orifices 156 destinés à former une ventouse pour immobiliser les préformes 10 en position.

Avantageusement, chacun des orifices 156 d'aspiration est relié sélectivement à une source 158 de vide, telle qu'une pompe à vide, pour obtenir une dépression au niveau dudit orifice 156 que provoque l'aspiration de l'air par ladite source 158.

La dépression établie au niveau de l'orifice 156 permet de générer une force d'immobilisation qui, orientée radialement vers l'intérieur, est susceptible d'être appliquée sur au moins une partie de la surface 26 cylindrique du corps 12 d'une préforme 10 dans le but de l'immobiliser.

Avantageusement, la force d'immobilisation appliquée sur le corps 12 une préforme 10 est celle résultant de l'aspiration de l'air au niveau d'un orifice 156, en variante la force d'immobilisation est appliquée par l'intermédiaire de plus d'un orifice 156.

De préférence, la couronne 152 formant la partie mobile des moyens 150 d'immobilisation par dépression comporte une série de logements 160.

Les logements 160 sont chacun ménagés dans ladite face 154 externe de la couronne 152 autour d'au moins un desdits orifices 156 d'aspiration.

Les logements 160 sont répartis circonférentiellement de manière régulière et sont chacun configurés pour recevoir au moins une partie du corps 12 d'une préforme 10 à immobiliser.

Avantageusement, chaque logement 160 qui est associé à une préforme 10 présente globalement une forme concave orientée radialement vers l'extérieur de la couronne 152.

Les moyens 150 d'immobilisation par dépression selon le premier mode de réalisation comportent au moins une partie 162 fixe qui, complémentaire de la partie 152 mobile formée par ladite couronne, n'est pas entraînée en rotation.

La partie 162 fixe comporte au moins une chambre 164 d'aspiration qui est reliée à ladite source 158 de vide afin de pouvoir être mise en dépression.

De préférence, la partie 162 fixe des moyens 150 d'immobilisation par dépression est réalisée au moins en deux pièces, respectivement une première pièce 166 formée par un anneau et une deuxième pièce 168 formée par un disque.

L'anneau 166 présente en coupe axiale selon un plan radial une forme en « U » inversé délimitant intérieurement ladite chambre 164 d'aspiration que le disque 168 complémentaire vient fermer axialement par en dessous.

L'anneau 166 comporte au moins une lumière 170 qui, ménagée dans une face 171 supérieure, détermine un secteur angulaire S2 d'aspiration correspondant à un secteur dans lequel lesdits orifices 156 d'aspiration sont mis en communication avec ladite chambre 164 d'aspiration qui est en dépression.

De préférence, l'anneau 166 comporte trois lumières 170 qui s'étendent circonférentiellement sur l'extérieur de l'anneau et forment un passage axial par lequel l'air extérieur est susceptible d'être aspiré au niveau des orifices 156 par la source 158 de vide.

Avantageusement, l'étendue dudit secteur angulaire S2 d'aspiration est susceptible d'être modifiée par l'intermédiaire de moyens 172 de fermeture aptes à obturer au moins une partie d'au moins une lumière 170 de mise en communication avec la chambre 164 d'aspiration en dépression.

De préférence, les orifices 156 d'aspiration ne sont pas mis en communication avec la chambre 164 d'aspiration en dépression en dehors dudit secteur angulaire S2 d'aspiration, c'est-à-dire notamment pas dans le secteur angulaire S1, ni sur le trajet de retour s'étendant de la sortie S jusqu'à l'entrée E.

Tel qu'illustré sur la figure 6, le disque 168 comporte au moins une ouverture 174, ici deux ouvertures oblongues, par l'intermédiaire de laquelle ladite chambre 164 d'aspiration est mise en communication avec la source 158 de vide.

De préférence, le dispositif 100 de transport comporte un collecteur 176 d'aspiration qui est fixé sur la face inférieure du disque 168, en coïncidence avec les deux ouvertures 174.

Le collecteur 176 d'aspiration est, d'une part, relié à ladite chambre 164 d'aspiration par l'intermédiaire de ladite au moins une ouverture 174 ménagée dans le disque 168 et, d'autre part, relié à une pompe d'aspiration (non représentée) formant ladite source 158 de vide.

Le collecteur 176 d'aspiration comporte par exemple un embout qui, s'étendant radialement, est destiné au raccordement de l'extrémité d'une conduite dont l'autre extrémité est raccordée à ladite pompe d'aspiration.

Les figures 4 et 5 en coupe illustrent plus particulièrement la mise en communication sélective de la chambre 164 d'aspiration avec ceux des orifices 156 selon que les orifices 156 se trouvent ou non dans le secteur angulaire S2 d'aspiration.

Chaque orifice 156 de ladite couronne 152 est relié par un perçage 178 à une cavité 180 interne, ledit perçage 178 s'étendant radialement vers l'intérieur.

Une cavité 180 interne est associée à au moins un orifice 156, de préférence ici un seul orifice. La cavité 180 interne est sélectivement mise en communication avec la chambre 164 d'aspiration en dépression lorsque l'orifice 156 parcourt ledit secteur angulaire S2 d'aspiration.

Lesdits moyens 150 d'immobilisation par dépression comportent des moyens 182 d'étanchéité dynamique qui sont agencés entre au moins la partie 152 mobile formée par la couronne et la partie 162 fixe formée par l'anneau 166 et le disque 168.

Avantageusement, le dispositif 100 de transport comporte des moyens 184 de stabilisation destinés à faciliter l'immobilisation des préformes 10 par lesdits moyens 150 d'immobilisation par dépression.

La figure 7 illustre plus particulièrement un exemple de réalisation de tels moyens 184 de stabilisation.

Selon cet exemple, les moyens 184 de stabilisation comportent un plot 186 extérieur et un plot 188 intérieur qui sont disposés radialement en vis-à-vis de part et d'autre du chemin 148 parcouru par les préformes 10.

Les plots 186 et 188 présentent en coupe axiale globalement une forme en « L ».

Le plot 186 extérieur comporte une plaque 190 de stabilisation qui s'étend radialement vers l'intérieur en direction du chemin 148, tandis que le plot 188 intérieur comporte une plaque 192 de stabilisation qui s'étend radialement vers l'extérieur en direction du chemin 148.

Chacun des plots 186 et 188 est configuré pour que les plaques 190 et 192 de stabilisation présentent axialement un jeu « j » par rapport aux moyens 130 de support des préformes 10.

Le jeu « j » axial est supérieur à l'épaisseur de la collerette 20 d'une préforme 10 afin d'en permettre le passage en dessous desdites plaques 190 et 192 de stabilisation.

Le plot 186 extérieur est fixé sur la deuxième pièce 140 de support de manière que la plaque 190 s'étende au-dessus du bord 146 intérieur avec axialement ledit jeu « j ».

De préférence, le dispositif 100 de transport comporte des moyens 194 de guidage des cols 14 des préformes 10.

Les moyens 194 de guidage s'étendent avantageusement dans le prolongement des moyens 122 de guidage qui sont agencés au niveau de l'entrée E du dispositif 100 de transport et jusqu'aux moyens 184 de stabilisation.

Les moyens 194 de guidage comme les moyens 122 de guidage s'étendent axialement au-dessus, à l'aplomb, du chemin 148 à une distance supérieure à la hauteur du col 14 des préformes 10.

Les moyens 194 de guidage s'achèvent après les moyens 184 de stabilisation puisque les préformes 10 stabilisées sont alors immobilisées en position par les moyens 150 d'immobilisation par dépression.

Avantageusement, Les moyens 194 de guidage s'achèvent ainsi avant la zone 116 de détection afin ne pas faire écran entre les préformes 10 et l'appareil 112 du système 110 de détection optique et.

Tel qu'illustré sur les figures 4 et 5, les moyens 194 de guidage sont agencés axialement au-dessus du chemin 148 et en suivent globalement l'arc de cercle.

Le plot 188 intérieur est fixé aux moyens 194 de guidage et s'étend axialement avec ledit jeu « j » au-dessus du plateau 132 mobile comportant les encoches 134.

Grâce aux moyens 184 de stabilisation, chaque préforme 10 en cours de transport est stabilisée lors de son passage.

Les plaques 190 et 192 de stabilisation coopèrent avec la collerette 20 de la préforme 10 pour forcer la préforme 10 à occuper une position axiale (ou « droite »), c'est-à-dire dans laquelle l'axe A de la préforme 10 est coaxial à l'axe O de rotation.

Une fois stabilisée en position axiale, le corps 12 de la préforme 10 se positionne dans un des logements 160 où ledit corps 12 est alors automatiquement immobilisé par les moyens 150 d'immobilisation par dépression.

L'aspiration de l'air réalisée au niveau de l'orifice 156 d'aspiration du fait de la dépression a en effet pour conséquence d'appliquer un effort d'immobilisation sur la partie de la surface 26 externe du corps 12 de la préforme 10 se trouvant radialement en vis-à-vis, grâce à quoi la préforme 10 est alors immobilisée en position, bloquée en rotation.

La préforme 10 immobilisée rentre ensuite dans la zone 116 de détection dans laquelle le système 110 de détection optique va déterminer la position des moyens 30 d'indexation de la préforme 10.

Grâce à l'étape de détection, on connaît la position des moyens 30 d'indexation de la préforme 10 ce qui permet ensuite pour l'étape d'orientation de calculer quel est l'entraînement en rotation de la préforme 10 à effectuer pour, partant de la position détectée, l'amener dans ladite position de référence.

De préférence, les moyens 150 d'immobilisation par dépression sont agencés axialement en dessous des moyens 130 de support de manière à transporter les préformes 10 avec une orientation dite « col en haut ».

Chaque encoche 134 du plateau 132 est globalement alignée axialement avec au moins un orifice 156 d'aspiration des moyens 150 d'immobilisation par dépression de manière à former ensemble un poste destiné à recevoir une préforme 10.

La couronne 152 formant la partie mobile des moyens 150 d'immobilisation par dépression est solidaire en rotation du plateau 132 mobile desdits moyens 130 de support.

Avantageusement, la couronne 152 et le plateau 132 sont fixés ensemble, et ce faisant liés en rotation, par des moyens 196 de fixation, par exemple par vissage.

Les moyens 196 de fixation sont choisis pour permettre de procéder facilement à des changements de ces pièces de personnalisation afin de configurer rapidement le dispositif 100 de transport en vue du transport d'un autre type de préforme 10.

Le premier mode de réalisation du dispositif 100 de transport qui vient d'être décrit n'est donné qu'à titre d'exemple non limitatif.

En variante, le dispositif 100 de transport ne comporte pas de système 110 de détection optique. La détection des moyens 30 d'indexation des préformes 10 pourraient en effet être réalisée autrement qu'avec un tel système 110 de détection optique.

Avantageusement, la détection des moyens 30 d'indexation des préformes 10 est réalisée mécaniquement à l'aide d'un système comportant en outre des moyens d'indexage configurés pour coopérer avec lesdits moyens 30 d'indexation.

A titre d'exemple, on pourra avantageusement se reporter à la demande de brevet français N°1761769 (non publiée) déposée le 07/12/2017 au nom de la Demanderesse.

Dans ce document, le dispositif de traitement pour positionner une préforme comporte des moyens d'indexage qui sont montés mobiles entre au moins une première position escamotée dans laquelle les moyens d'indexage sont escamotés et une deuxième position déployée dans laquelle les moyens d'indexage sont déployés afin de pouvoir rechercher une position de référence d'une préforme.

Le dispositif de traitement comporte également, associés aux moyens d'indexage, des moyens d'entraînement aptes à entraîner sélectivement en rotation une préforme afin de rechercher ladite position de référence dans laquelle lesdits moyens d'indexage occupant ladite deuxième position déployée coopèrent avec les moyens d'indexation de la préforme.

Selon les enseignements de ce document, on réalise en outre une étape de détection consistant, lors de l'entraînement en rotation de la préforme par les moyens d'entraînement, à détecter une variation d'au moins un paramètre de fonctionnement qui est lié auxdits moyens d'entraînement, ladite variation survenant lorsque la préforme atteint ladite position de référence.

Tel qu'indiqué précédemment, les moyens d'immobilisation par dépression du dispositif 100 de transport ne constituent qu'un mode de réalisation préféré.

En effet, la force d'immobilisation appliquée sur le corps pour immobiliser les préformes 10 en position, pour les bloquer en rotation, pourrait également être obtenue d'une autre manière.

En variante non représentée, la force d'immobilisation est une force de pression qui est obtenue par au moins une lame d'air ou des jets d'air.

Les moyens délivrant la force de pression, tels que des jets d'air, sont par exemple agencés radialement à l'extérieur (à l'opposé du plateau) et axialement en dessous des moyens fixes de support des préformes.

Les jets d'air sont orientés radialement vers l'intérieur, en direction du corps des préformes, pour appliquer une force de pression apte à plaquer chaque préforme contre une surface d'appui.

Par analogie avec le premier mode de réalisation, la surface d'appui appartient par exemple à un logement ménagé dans la face externe d'une couronne agencée axialement en dessous et liée en rotation à un plateau mobile de support.

Afin d'illustrer encore une autre manière d'obtenir ladite force d'immobilisation, ne formant pas une partie de l'invention, on a représenté sur les figures 8 et 9 un deuxième mode de réalisation.

Dans ce deuxième mode de réalisation, la force d'immobilisation appliquée sur le corps pour immobiliser les préformes en position est obtenue par frottement.

On décrira ci-après ce deuxième mode de réalisation par comparaison avec le premier mode de réalisation représenté aux figures 2 à 7.

Dans la description qui suit les mêmes références désignent les mêmes moyens que ceux du premier mode de réalisation.

Le dispositif 100 de transport est par exemple alimenté en préformes 10 par un dispositif 118 d'alimentation par gravité comportant au moins deux rails 120 parallèles et coplanaires.

Le dispositif 100 de transport comporte des moyens 130 de support des préformes 10 qui sont chacune suspendues par l'intermédiaire de leur collerette 20 axialement en appui sur le plateau 132 mobile munis d'encoches 134 d'une part, et sur les moyens 136 fixes de support, d'autre part.

Avantageusement, le dispositif 100 de transport comporte des moyens 194 de guidage des cols 14 qui sont représentés schématiquement sur la figure 9.

Tel qu'illustré sur la figure 9, les moyens 250 d'immobilisation par frottement comportent par exemple au moins une brosse 251.

De préférence, les brosses 251 sont solidaires d'un élément 253 mobile, telle qu'une bande ou une courroie, formant une boucle fermée. Ledit élément 253 mobile est entraîné sans fin par l'intermédiaire d'au moins une poulie 255 d'entraînement.

Selon une caractéristique importante, la vitesse d'entraînement de l'élément 253 mobile portant les brosses 251 est déterminée pour être synchronisée avec celle du plateau 132 mobile de support de manière qu'il n'y ait pas de différence de vitesse.

Les moyens 250 d'immobilisation par frottement sont agencés radialement à l'extérieur en vis-à-vis d'une pièce qui est par exemple extérieurement similaire à la couronne 152 décrite précédemment (à l'exception bien entendu des orifices 156 d'aspiration et autres moyens associés).

Des poils 257 des brosses 251 sont orientés radialement vers l'intérieur, en direction du corps 12 des préformes 10, pour appliquer par frottement une force de pression apte à plaquer chaque préforme 10 contre une surface d'appui.

Par analogie avec le premier mode de réalisation, la surface d'appui appartient par exemple à un logement 160 ménagé dans la face externe d'une couronne 152 agencée axialement en dessous et liée en rotation un plateau 132 mobile de support.

## Revendications

1. Dispositif (100) de transport de type rotatif pour des préformes (10) en matière thermoplastique comportant au moins un corps (12) et un col (14), ledit dispositif (100) de transport comporte au moins des moyens (130, 132, 136) de support qui sont configurés pour coopérer avec une collerette (20) du col (14) de la préforme (10), lesquels moyens (130, 132, 136) de support comprennent au moins des moyens (132) mobiles destinés à être entraînés en rotation autour d'un axe (O) de rotation pour transporter lesdites préformes (10) d'une entrée (E) jusqu'à une sortie (S) dudit dispositif, les moyens de support maintenant axialement ladite préforme (10) lors du transport, en ce qu'il comprend des moyens d'immobilisation, distincts des moyens (130, 132, 136) de support, configurés pour appliquer sélectivement sur une partie (26) du corps (12) de ladite préforme (10) une force d'immobilisation obtenue par dépression afin d'immobiliser ladite préforme (10) en position par rapport aux moyens (132) mobiles, **caractérisé en ce que** les moyens (150) d'immobilisation par dépression comportent au moins :
- une partie (152) mobile comportant une face (154) externe dans laquelle débouchent radialement des orifices (156) formant ventouse, chacun desdits orifices (156) d'aspiration étant relié sélectivement à une source (158) de vide pour obtenir une dépression au niveau dudit orifice (156) par aspiration de l'air afin de générer ladite force d'immobilisation qui est appliquée sur au moins une partie (26) du corps (12) pour immobiliser la préforme (10) ;
- une partie (162) fixe, complémentaire de la partie (152) mobile, dans laquelle est aménagée au moins une chambre (164) d'aspiration qui est reliée à ladite source (158) de vide afin de pouvoir être mise en dépression, la dite partie (162) fixe des moyens (150) d'immobilisation par dépression comportant au moins un anneau (166) et un disque (168), ledit anneau (166) présentant en coupe axiale selon un plan radial une forme en « U » inversé délimitant intérieurement ladite chambre (164) d'aspiration que ledit disque (168) vient fermer axialement par en dessous..

2. Dispositif selon la revendication 1, **caractérisé en ce que** ladite partie (152) mobile comporte une série de logements (160) qui sont chacun ménagés dans ladite face (154) externe autour d'au moins un desdits orifices (156) d'aspiration, lesdits logements (160) étant répartis circonférentiellement et configurés pour recevoir chacun au moins une partie du corps (12) d'une préforme (10).

3. Dispositif selon la revendication 1, **caractérisé en ce que** ledit anneau (166) comporte au moins une lumière (170) qui détermine un secteur angulaire (S2) d'aspiration dans lequel une partie desdits orifices (156) d'aspiration est mise en communication avec ladite chambre (164) d'aspiration en dépression.

4. Dispositif selon l'une quelconque des revendications 1 à 3, **caractérisé en ce que** chaque orifice (156) d'aspiration est relié par un perçage (178) à une cavité (180) interne destinée à être mise sélectivement en communication avec ladite chambre (164) d'aspiration en dépression.

5. Dispositif selon l'une quelconque des revendications précédentes, **caractérisé en ce que** ledit dispositif (100) comporte des moyens (184) de stabilisation pour faciliter l'immobilisation des préformes (10) par lesdits moyens (150) d'immobilisation

6. Dispositif selon l'une quelconque des revendications précédentes, du type dans lequel le col (14) de chaque préforme (10) comporte des moyens (30) d'indexation destinés à permettre d'orienter angulairement ladite préforme (10) dans une position de référence, **caractérisé en ce que** le dispositif (100) comporte un système (110) de détection optique qui est apte à déterminer la position angulaire des moyens (30) d'indexation d'au moins une préforme (10).

7. Dispositif selon l'une quelconque des revendications précédentes, **caractérisé en ce que** lesdits moyens (130, 132, 136) de support des préformes (10) comportent au moins des moyens (136) fixes comportant un bord (146) configuré pour coopérer avec une autre portion de ladite collerette (20) du col (14) de chacune des préformes (10), lesdits moyens (136) fixes étant agencés radialement en vis-à-vis des moyens (132) mobiles de manière à délimiter entre eux un espace déterminé formant un chemin (148) parcouru par les préformes (10) lors du transport.

## Patentansprüche

1. Transportvorrichtung (100) vom rotierenden Typ für Vorformlinge (10) aus thermoplastischem Material, die mindestens einen Körper (12) und einen Hals (14) aufweisen, wobei die Transportvorrichtung (100) mindestens Stützmittel (130, 132, 136) umfasst, die dazu ausgestaltet sind, mit einem Kragen (20) des Halses (14) des Vorformlings (10) zusammenzuwirken, wobei die Stützmittel (130, 132, 136) mindestens bewegliche Mittel (132) umfassen, die dazu bestimmt sind, um eine Drehachse (O) drehangetrieben zu werden, um die Vorformlinge (10) von einem Eingang (E) bis zu einem Ausgang (S) der Vorrichtung zu transportieren, wobei die Stützmittel den Vorformling (10) bei dem Transport axial halten, dass sie Immobilisierungsmittel umfasst, die von den Stützmitteln (130, 132, 136) verschieden sind und dazu ausgestaltet sind, selektiv auf einen Teil (26) des Körpers (12) des Vorformlings (10) eine Immobilisierungskraft auszuüben, die durch Unterdruck erhalten wird, um den Vorformling (10) in seiner Position in Bezug auf die beweglichen Mittel (132) zu immobilisieren, **dadurch gekennzeichnet, dass** die Mittel (150) zur Immobilisierung durch Unterdruck mindestens aufweisen:
- einen beweglichen Teil (152), der eine Außenfläche (154) aufweist, in die einen Saugnapf bildende Öffnungen (156) münden, wobei jede der Saugöffnungen (156) selektiv mit einer Vakuumquelle (158) verbunden ist, um durch Ansaugen von Luft einen Unterdruck im Bereich der Öffnung (156) zu erhalten, um die Immobilisierungskraft zu erzeugen, die auf mindestens einen Teil (26) des Körpers (12) ausgeübt wird, um den Vorformling (10) zu immobilisieren;
- einen feststehenden Teil (162), der komplementär zu dem beweglichen Teil (152) ist und in dem mindestens eine Saugkammer (164) ausgebildet ist, die mit der Vakuumquelle (158) verbunden ist, um unter Unterdruck gesetzt werden zu können, wobei der feststehende Teil (162) der Mittel (150) zur Immobilisierung durch Unterdruck mindestens einen Ring (168) und eine Scheibe (166) aufweist, wobei der Ring (166) im axialen Schnitt entlang einer radialen Ebene eine Form eines umgekehrten "U" aufweist, die die Saugkammer (164) innen begrenzt, welche die Scheibe (168) axial von unten verschließt.

2. Vorrichtung nach Anspruch 1, **dadurch gekennzeichnet, dass** der bewegliche Teil (152) eine Reihe von Aufnahmen (160) aufweist, die jeweils in der Außenfläche (154) um mindestens eine der Saugöffnungen (156) herum angeordnet sind, wobei die Aufnahmen (160) in Umfangsrichtung verteilt und so konfiguriert sind, dass sie jeweils mindestens einen Teil des Körpers (12) eines Vorformlings (10) aufnehmen.

3. Vorrichtung nach Anspruch 1, **dadurch gekennzeichnet, dass** der Ring (166) mindestens ein Loch (170) aufweist, das einen Saugwinkelsektor (S2) bestimmt, in dem ein Teil der Saugöffnungen (156) mit der Unterdrucksaugkammer (164) in Verbindung gebracht wird.

4. Vorrichtung nach einem der Ansprüche 1 bis 3, **dadurch gekennzeichnet, dass** jede Saugöffnung (156) über eine Bohrung (178) mit einem inneren Hohlraum (180) verbunden ist, der dazu bestimmt ist, selektiv mit der Unterdrucksaugkammer (164) in Verbindung gebracht zu werden.

5. Vorrichtung nach einem der vorangehenden Ansprüche, **dadurch gekennzeichnet, dass** die Vorrichtung (100) Stabilisierungsmittel (184) aufweist, um die Immobilisierung der Vorformlinge (10) durch die Immobilisierungsmittel (150) zu erleichtern.

6. Vorrichtung nach einem der vorangehenden Ansprüche von der Art, bei der der Hals (14) jedes Vorformlings (10) Indexierungsmittel (30) aufweist, die dazu bestimmt sind, den Vorformling (10) winkelmäßig in einer Referenzposition auszurichten, **dadurch gekennzeichnet, dass** die Vorrichtung (100) ein optisches Erfassungssystem (110) aufweist, das dazu geeignet ist, die Winkelposition des Indexierungsmittels (30) mindestens eines Vorformlings (10) zu bestimmen.

7. Vorrichtung nach einem der vorangehenden Ansprüche, **dadurch gekennzeichnet, dass** die Stützmittel (130, 132, 136) der Vorformlinge (10) zumindest feste Mittel (136) aufweisen, die einen Rand (146) aufweisen, der so konfiguriert ist, dass er mit einem anderen Abschnitt des Kragens (20) des Halses (14) jedes der Vorformlinge (10) zusammenwirkt, wobei die festen Mittel (136) radial gegenüber den beweglichen Mitteln (132) angeordnet sind, um zwischen sich einen bestimmten Raum zu begrenzen, der einen Weg (148) bildet, der von den Vorformlingen (10) während des Transports zurückgelegt wird.

## Claims

1. Rotary-type conveying device (100) for preforms (10) made of thermoplastic material, comprising at least a body (12) and a neck (14), said conveying device (100) comprises at least support means (130, 132, 136) configured to engage with a collar (20) of the neck (14) of the preform (10), which support means (130, 132, 136) comprise at least movable means (132) intended to be rotated about an axis (O) of rotation in order to convey said preforms (10) from an inlet (E) to an outlet (S) of said device, the support means holding said preform (10) axially during conveying, in that it comprises immobilizing means which are distinct from the support means (130, 132, 136) and are configured to selectively apply an immobilizing force, obtained by a reduction in pressure, to a part (26) of the body (12) of said preform (10) in order to immobilize said preform (10) in position relative to the movable means (132), **characterized in that** the means (150) for immobilizing by reduced pressure comprise at least:
- one movable part (152) comprising an outer face (154) in which orifices (156) open radially so as to form a suction cup, each one of said suction orifices (156) being selectively connected to a vacuum source (158) so as to obtain a reduced pressure at said orifice (156) by suction of the air in order to generate said immobilizing force which is applied to at least one part (26) of the body (12) in order to immobilize the preform (10);
- one fixed part (162) which complements the movable part (152) and in which there is created at least one suction chamber (164) that is connected to said vacuum source (158) in order to be able to be placed under reduced pressure, said fixed part (162) of the means (150) for immobilizing by reduced pressure comprises at least one ring (166) and one disk (168), said ring (166) being in the shape of an inverted U in axial section along a radial plane, the inside of this U delimiting said suction chamber (164), which said disk (168) then closes axially from below.

2. Device according to Claim 1, **characterized in that** said movable part (152) comprises a row of recesses (160) which are each created in said outer face (154) around at least one of said suction orifices (156), said recesses (160) being distributed circumferentially and configured to each receive at least one part of the body (12) of the preform (10).

3. Device according to Claim 1, **characterized in that** said ring (166) comprises at least one opening (170) which determines an angular suction sector (S2) in which a part of said suction orifices (156) is connected to said suction chamber (164) under reduced pressure.

4. Device according to any one of Claims 1 to 3, **characterized in that** each suction orifice (156) is connected via a hole (178) to an internal cavity (180) that is intended to be selectively connected to said suction chamber (164) under reduced pressure.

5. Device according to any one of the preceding claims, **characterized in that** said device (100) comprises stabilizing means (184) to make it easier for said immobilizing means (150) to immobilize the preforms (10).

6. Device according to any one of the preceding claims, of the type in which the neck (14) of each preform (10) comprises indexing means (30) that are intended to make it possible to angularly orient said preform (10) in a reference position, **characterized in that** the device (100) comprises an optical detection system (110) which is able to determine the angular position of the indexing means (30) of at least one preform (10).

7. Device according to any one of the preceding claims, **characterized in that** said means (130, 132, 136) for supporting the preforms (10) comprise at least fixed means (136) comprising an edge (146) configured to engage with another portion of said collar (20) of the neck (14) of each of the preforms (10), said fixed means (136) being arranged radially facing the movable means (132) so as to delimit between them a specific space forming a path (148) taken by the preforms (10) during conveying.
